# EUROPÄISCHE PATENTSCHRIFT

(11) **EP 1 311 749 B1**
(45) Veröffentlichungstag und Bekanntmachung des Hinweises auf die Patenterteilung: **02.11.2006**
(21) Anmeldenummer: 01956348.5
(22) Anmeldetag: 20.07.2001
(51) Int. Cl.: F02D 41/30, F02D 41/06

(54) **VERFAHREN, COMPUTERPROGRAMM UND STEUER- UND/ODER REGELEINRICHTUNG ZUM BETREIBEN EINER BRENNKRAFTMASCHINE**
METHOD, COMPUTER PROGRAM AND CONTROL DEVICE AND/OR REGULATING DEVICE FOR OPERATING AN INTERNAL COMBUSTION ENGINE
PROCEDE, PROGRAMME INFORMATIQUE ET DISPOSITIF DE COMMANDE ET/OU DE REGULATION POUR ACTIONNER UN MOTEUR A COMBUSTION INTERNE

(30) Priorität: 14.08.2000 DE 10040252
(43) Veröffentlichungstag der Anmeldung: 21.05.2003
(73) Patentinhaber: ROBERT BOSCH GMBH, 70442 Stuttgart (DE)
(72) Erfinder: JOOS, Klaus, 74399 Walheim (DE); ROTH, Andreas, 75417 Muehlacker (DE); GRASS, Gerd, 71701 Schwieberdingen (DE); WEISS, Ruediger, 71159 Moetzingen (DE); SCHAUT, Edmund, 71292 Friolzheim (DE); HIPP, Ulrich, 71732 Tamm (DE); HAENDLE, Manfred, 71563 Siegelhausen (DE)
(86) Internationale Anmeldenummer: PCT/DE2001/002744
(87) Internationale Veröffentlichungsnummer: WO 2002/014668

(56) Entgegenhaltungen:
- EP-A- 0 864 734
- EP-A- 1 148 224
- DE-A- 19 647 092
- DE-A- 19 954 463
- PATENT ABSTRACTS OF JAPAN vol. 009, no. 162 (M-394), 6. Juli 1985 (1985-07-06) & JP 60 036720 A (MAZDA KK), 25. Februar 1985 (1985-02-25)
- PATENT ABSTRACTS OF JAPAN vol. 009, no. 155 (M-392), 29. Juni 1985 (1985-06-29) & JP 60 030440 A (MAZDA KK), 16. Februar 1985 (1985-02-16)
- PATENT ABSTRACTS OF JAPAN vol. 017, no. 572 (M-1497), 18. Oktober 1993 (1993-10-18) -& JP 05 163978 A (AISAN IND CO LTD), 29. Juni 1993 (1993-06-29)

## Beschreibung

### Stand der Technik

Die vorliegende Erfindung betrifft ein Verfahren zum Betreiben einer Brennkraftmaschine insbesondere für ein Kraftfahrzeug, bei dem Kraftstoff direkt in mindestens einen Brennraum wenigstens zeitweise so eingespritzt und Luft dem Brennraum über ein Ansaugrohr wenigstens zeitweise so zugeführt wird, dass das Gemisch aus Kraftstoff und Luft im Brennraum geschichtet ist, und bei dem eine für die Brennkraftmaschine spezifische Temperatur ermittelt wird.

Ein solches Verfahren ist vom Markt her bekannt und wird im Allgemeinen als BDE-Schichtbetrieb bezeichnet (BDE = Benzindirekteinspritzung). Bei einem solchen Verfahren wird das Gemisch im Bereich einer im Brennraum der Brennkraftmaschine angeordneten Zündkerze so weit angereichert, dass eine sichere Entflammung garantiert ist. Die Verbrennung im übrigen Brennraum findet allerdings im Mittel bei stark abgemagertem Gemisch, also bei deutlichem Luftüberschuss, statt. Im Brennraum sind also Schichten mit unterschiedlichem Kraftstoff-Luftverhältnis vorhanden.

Bei dem bekannten Verfahren hat sich jedoch herausgestellt, dass bei kalter Brennkraftmaschine das Betriebserhalten im Schichtbetrieb sich von dem bei warmer Brennkraftmaschine deutlich unterscheidet und nicht immer optimal ist.

Bekannt ist weiterhin aus der JP 60 036 720 A, die Drosselklappe abhängig von der Abgastemperatur einzustellen. Ferner offenbart die EP 0 864 734 A2 allgemein, während einer Warmlaufphase einer Brennkraftmaschine mit Direkteinspritzung im Schichtbetrieb stark gedrosselt zu betreiben.

Die vorliegende Erfindung hat die Aufgabe, das Betriebsverhalten der Brennkraftmaschine im Schichtbetrieb bei kalter und warmer Brennkraftmaschine zu optimieren.

Diese Aufgabe wird durch ein Verfahren mit den Merkmalen des Anspruchs 1 gelöst.

Als eine wesentliche Ursache für das temperaturabhängige Fahrverhalten einer im Schichtbetrieb betriebenen Brennkraftmaschine wurde das Verdampfungsverhalten des Kraftstoffes im Brennraum identifiziert. Je besser und schneller der Kraftstoff verdampft und je kleiner die Dampftröpfchen des Kraftstoffes sind, desto besser, also gleichmäßiger, erfolgt die Verbrennung.

Die Verdampfungseigenschaften des Kraftstoffes hängen jedoch u.a. von der Temperatur ab: Bei kalter Temperatur der Brennkraftmaschine ist auch die angesaugte und sich im Brennraum befindliche Luft relativ kalt, was die optimale Verdampfung des Kraftstoffes erschwert. Umgekehrt ist bei warmer Brennkraftmaschine die Luft relativ warm, was die Verdampfung des Kraftstoffes fördert.

Erfindungsgemäß wurde nun erkannt, dass die Verdampfung des Kraftstoffes nicht nur von der Temperatur, sondern auch vom Druck der angesaugten Luft abhängt. Bei geringerem Druck erfolgt insbesondere bei kalten Temperaturen der Brennkraftmaschine eine bessere Verdampfung des eingespritzten Kraftstoffes. Umgekehrt kann bei hoher spezifischer Temperatur der Brennkraftmaschine auch ein hoher Druck im Ansaugrohr zulässig sein, ohne dass hierdurch das Betriebsverhalten der Brennkraftmaschine verschlechtert wird. Die erfindungsgemäße Maßnahme, den Druck im Ansaugrohr abhängig von der ermittelten Temperatur einzustellen, ermöglicht es also, in jedem Temperaturbereich der Brennkraftmaschine die für eine optimale Verdampfung des Kraftstoffes erforderlichen Druckverhältnisse im Ansaugrohr bereitzustellen.

Durch die erfindungsgemäße Maßnahme wird u.a. die Laufruhe der Brennkraftmaschine in kaltem Betriebszustand verbessert. Auch werden weniger Schadstoffe emittiert. Zusätzlich entstehen höhere Abgastemperaturen, die für die Aufheizung des Vorkatalysators von Vorteil sind. Trotz der Androsselung im Schichtbetrieb ist der Saugrohrdruck immer noch höher als bei Homogenbetrieb. U.a. ist dadurch auch eine Kraftstoffersparnis möglich.

Zur Ermittlung der für die Brennkraftmaschine spezifischen Temperatur eignen sich insbesondere Fluide, welche während des Betriebs der Brennkraftmaschine durch diese hindurch oder an dieser vorbeigeleitet werden. Vorteilhaft ist daher ein erfindungsgemäßes Verfahren, bei dem die Temperatur eines beim Betrieb der Brennkraftmaschine erwärmten Fluids, insbesondere von Kühlwasser und/oder Kühlluft und/oder Öl ermittelt wird. Die Temperatur dieser Fluide liegt in einem Bereich, der mit relativ preiswerten Sensoren erfasst werden kann. Darüber hinaus reagieren diese Fluide relativ schnell auf Veränderungen der Temperatur der Brennkraftmaschine, also z.B. des Motorblocks, so dass der tatsächliche Betriebszustand der Brennkraftmaschine ohne große Verzögerung ermittelt werden kann.

Vorteilhafte Weiterbildungen der Erfindung sind in Unteransprüchen angegeben:

Die Veränderung des Drucks im Ansaugrohr erfolgt vorzugsweise durch eine Querschnittsveränderung mindestens eines Bereichs des Ansaugrohrs, insbesondere durch eine Winkeländerung einer Drosselklappe. Hierbei handelt es sich um eine gängige und einfache Art und Weise, den Druck im Ansaugrohr zu verändern. U.U. können aber auch Ventile vorgesehen sein, die Ansaugrohre unterschiedlicher Länge und/oder unterschiedlichen Durchmessers je nach gewünschtem Druck mit dem Brennraum verbinden.

Bei vielen Brennkraftmaschinen ist der Druck im Ansaugrohr nicht nur ein für den Betrieb der Brennkraftmaschine selbst relevanter Parameter, sonder kann auch von anderen Einflussgrößen abhängen. So wird z.B. ein Bremskraftverstärker eines Fahrzeugs mit Unterdruck betrieben, welcher vom Ansaugrohr bereitgestellt werden muss.

Um den für eine Bremsung erforderlichen Unterdruck tatsächlich bereitstellen zu können, kann es daher erforderlich sein, den Druck im Ansaugrohr auf einen Wert abzusenken, der für das optimale Betriebsverhalten der Brennkraftmaschine an sich nicht notwendig wäre. Letztlich wird bei diesem Verfahren also der Druck im Ansaugrohr zusätzlich abhängig von anderen Einflussgrößen, insbesondere abhängig von einer Druckvorgabe einer Bremsunterdruckregelung, verändert und zwar derart, dass jeweils der kleinste gewünschte Druck eingestellt wird.

Anstelle von oder zusätzlich zu einer Druckveränderung auf der Basis von Grenzwerten kann diese auch abhängig von einer Kennlinie erfolgen.

Schließlich wird in Weiterbildung des erfindungsgemäßen Verfahrens vorgeschlagen, dass der Druck im Ansaugrohr abhängig von einem aus der Temperatur und einer relativen Kraftstoffmasse gebildeten Kennfeld verändert wird. Diese Weiterbildung des erfindungsgemäßen Verfahrens beruht auf der Erkenntnis, dass das Betriebsverhalten der Brennkraftmaschine nicht nur von einer spezifischen Temperatur der Brennkraftmaschine, sondern auch von der relativen Kraftstoffmasse abhängt, die entsprechend der Leistungs- bzw. Drehmomentanforderung des Benutzers in den Brennraum eingespritzt wird.

Die Auswirkungen einer schlechteren Verdampfung des eingespritzen Kraftstoffes sind bei einer geringen Menge an eingespritztem Kraftstoff deutlicher als bei einer großen eingespritzten Kraftstoffmasse. Dem wird durch das entsprechende Kennfeld Rechnung getragen. Ggf. könnte das Kennfeld auch die Stellung des Gaspedals und/oder die Drehzahl einer Kurbelwelle der Brennkraftmaschine umfassen.

Die Erfindung betrifft auch ein Computerprogramm, welches zur Durchführung des obigen Verfahrens- geeignet ist, wenn es auf einem Computer ausgeführt wird. Dabei ist besonders bevorzugt, wenn das Computerprogramm auf einem Speicher, insbesondere auf einem Flash-Memory, abgespeichert ist.

Die Erfindung betrifft schließlich eine Steuer- und/oder Regeleinrichtung zum Betreiben einer Brennkraftmaschine gemäß Anspruch 9.

Um das Betriebsverhalten in allen spezifischen Temperaturbereichen der Brennkraftmaschine zu optimieren, wird erfindungsgemäß vorgeschlagen, dass die Steuer- und/oder Regeleinrichtung Mittel aufweist, welche einen Sollwert für den Druck im Ansaugrohr abhängig von der ermittelten Temperatur verändern. Alternativ kann vorgesehen sein, dass die Steuer- und/oder Regeleinrichtung Mittel aufweist, welche einen Sollwert für die Stellung einer Drosselklappe im Ansaugrohr abhängig von der ermittelten Temperatur verändern.

Nachfolgend wird ein Ausführungsbeispiel der Erfindung unter Bezugnahme auf die beiliegende Zeichnung im Detail erläutert. In der Zeichnung zeigen:
- Figur 1: ein Blockschaltbild einer Brennkraftmaschine; und
- Figur 2: ein schematisches Flussdiagramm eines Verfahrens zum Betreiben der Brennkraftmaschine von Figur 1.

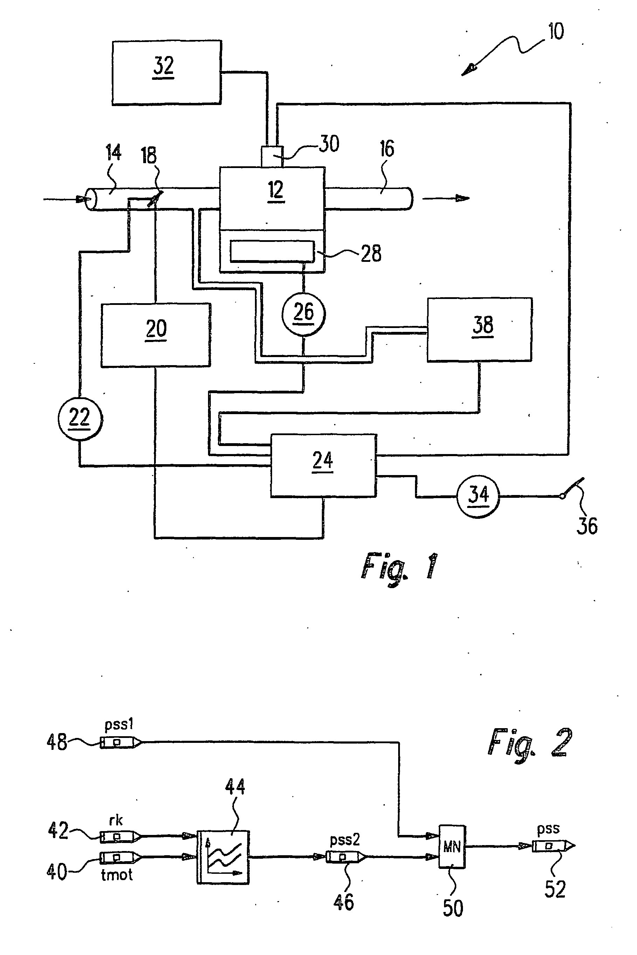

In Figur 1 trägt eine Brennkraftmaschine insgesamt das Bezugszeichen 10. Sie umfasst einen Brennraum 12, dem Luft durch ein Ansaugrohr 14 zugeführt wird. Die Abgase werden über ein Abgasrohr 16 abgeleitet.

Der Druck in jenem Bereich des Ansaugrohrs, welcher unmittelbar vor dem Brennraum 12 liegt, wird durch die Stellung einer Drosselklappe 18 eingestellt, deren Winkelposition durch einen Stellmotor 20 verändert werden kann. Die Stellung der Drosselklappe 18 wird von einem Stellungsgeber 22 erfasst und an eine Steuer- und Regeleinrichtung 24 weitergeleitet. Diese erhält ferner Signale von einem Temperaturfühler 26, der die Temperatur des Wassers eines Kühlwasserkreislaufs 28 abgreift.

In den Brennraum 12 wird über ein Ventil 30 Kraftstoff eingespritzt, welcher dem Ventil 30 von einem Kraftstofftank 32 zugeführt wird. Das Einspritzventil 30 wird von der Steuer- und Regeleinrichtung 24 abhängig von der von einem Stellungsgeber 34 erfassten Stellung eines Gaspedals 36 angesteuert.

Schließlich ist noch eine Bremsanlage 38 vorhanden, welche ebenfalls signaltechnisch mit der Steuer- und Regeleinrichtung 24 verbunden ist. Pneumatisch ist die Bremsanlage 38 mit dem zwischen der Drosselklappe 18 und dem Brennraum 12 liegenden Bereich des Ansaugrohrs 14 verbunden.

Der Betrieb der Brennkraftmaschine 10 wird nun unter Bezugnahme auf Figur 2 erläutert. Das dort dargestellte Verfahren ist als Computerprogramm auf einem in der Figur nicht dargestellten Flash-Memory der Steuer- und Regeleinrichtung 24 abgespeichert.

Basis des Verfahrens sind drei Eingangsgrößen, nämlich die vom Temperaturfühler 26 bereitgestellte Temperatur tmot (Block 40) des Kühlwassers, bei der es sich um eine für die Brennkraftmaschine 10 spezifische Temperatur handelt. Eine weitere Eingangsgröße ist die relative Kraftstoffmasse rk (Block 42), bei der es sich um jene Kraftstoffmasse handelt, welche über das Einspritzventil 30 in den Brennraum 12 eingespritzt wird. Die Kraftstoffmasse rk wird abhängig von der vom Stellungsgeber 34 erfassten Stellung des Gaspedals 36 ermittelt, also abhängig von der Leistung- bzw. Drehmomentanforderung des Benutzers.

Die beiden Eingangsgrößen rk und tmot werden im Block 44 mit einem in einem Speicher der Steuer- und Regeleinrichtung 24 abgelegten Kennfeld verglichen und es wird ein der Position im Kennfeld entsprechender Sollwert pss2 (Block 46) für den Druck im Ansaugrohr 14 ermittelt.

Parallel dazu wird in der Steuer- und Regeleinrichtung 24 ein von der Bremsanlage 38 abhängiger Sollwert pss1 für den Druck.im Ansaugrohr 14 bestimmt. Bei einer Betätigung eines in Figur 1 nicht dargestellten Bremspedals wird z.B. vom Bremskraftverstärker der Bremsanlage 38 ein Unterdruck gefordert, der vom Ansaugrohr 14 bereitgestellt werden muss. Dieser Unterdruck entspricht dem Sollwert pss1 im Block 48 des Flussdiagramms vom Figur 2. Die beiden Sollwerte pss1 (Block 48) und pss2 (Block 46) für den Druck im Ansaugrohr 14 werden in einen Minimalwertbildner 50 eingespeist, der den kleineren der beiden Werte als Sollwert pss (Block 52) für den Druck im Ansaugrohr 14 ausgibt:

Entsprechend dem Sollwert pss (Block 52) wird von der Steuer- und Regeleinrichtung 24 der Stellmotor 20 der Drosselklappe 18 angesteuert. Die Stellung der Drosselklappe 18 wird über den Stellungsgeber 22 im Sinne eines geschlossenen Regelkreises wieder an die Steuer- und Regeleinrichtung 24 zurückgekopplt. Die Stellung der Drosselklappe 18 wird von der Steuer- und Regeleinrichtung 24 dazu verwendet, um den im Ansaugrohr 14 herrschenden Druck zu modellieren. Auf diese Weise ist es möglich, den Sollwert pss (Block 52) für den Druck im Ansaugrohr 14 in eine Stellung der Drosselklappe 18 umzusetzen. Alternativ kann aber auch ein Drucksensor im Ansaugrohr vorgesehen sein, der ein dem im Ansaugrohr herrschenden Druck entsprechendes Signal direkt an die Steuer- und Regeleinrichtung 24 leitet.

Wenn der Temperaturfühler 26 eine relativ gesehen niedrige Temperatur tmot des im Wasserkreislauf 28 zirkulierenden Kühlwassers feststellt, wird über das Kennfeld (Block 44) ein relativ niedriger Soll-Druck pss2 ermittelt. Entsprechend wird die Drosselklappe 18 von der Steuer- und Regeleinrichtung 24 so angesteuert, dass der Querschnitt des Ansaugrohrs 14 enger und daher der zwischen' Drosselklappe 18 und Brennraum 12 im Ansaugrohr 14 herrschenden Druck geringer wird. Auf diese Weise wird auch dann, wenn die Brennkraftmaschine 10 noch kalt ist, also z.B. kurz nach dem Starten der Brennkraftmaschine 10, eine für die Durchführung des Schichtbetriebs ausreichende Verdampfung des Kraftstoffes im Brennraum 12 gewährleistet.

Im Übrigen kann anstelle des Kennfelds im Block 44 auch ein Vergleich mit einem oder mehreren Grenzwerten durchgeführt werden. Auch die Verwendung einer Kennlinie ist möglich. In diesem Fall würde dann keine Berücksichtigung der Kraftstoffmasse erfolgen.

## Patentansprüche

1. Verfahren zum Betreiben einer Brennkraftmaschine (10), bei dem Kraftstoff direkt in mindestens einen Brennraum (12) wenigstens zeitweise so eingespritzt und Luft dem Brennraum (12) über ein Ansaugrohr (14) wenigstens zeitweise so zugeführt wird, dass ein Gemisch aus Kraftstoff und Luft im Brennraum (12) geschichtet ist (Schichtbetrieb), und bei dem eine für die Brennkraftmaschine (10) spezifische Temperatur (tmot) ermittelt wird, **dadurch gekennzeichnet, dass** die Temperatur (tmot) eines Fluids, welches während des Betriebs der Brennkraftmaschine (10) durch diese hindurch oder an dieser vorbeigeleitet und hierdurch erwärmt wird, insbesondere von Kühlwasser (28) und/oder Kühlluft und/oder Öl, ermittelt wird, und im Schichtbetrieb der Druck (pss) im Ansaugrohr (14) variabel abhängig von dieser ermittelten Temperatur (tmot) eingestellt wird.

2. Verfahren nach Anspruch 1, **dadurch gekennzeichnet, dass** die Veränderung des Drucks (pss) im Ansaugrohr (14) durch eine Quersschnittsveränderung mindestens eines Bereichs des Ansaugrohrs (14) erfolgt.

3. Verfahren nach Anspruch 2, **dadurch gekennzeichnet, dass** die Veränderung des Drucks (pss) im Ansaugrohr durch eine Winkeländerung einer Drosselklappe (18) erfolgt.

4. Verfahren nach einem der vorhergehenden Ansprüche, **dadurch gekennzeichnet, dass** der Druck (pss) im Ansaugrohr (14) zusätzlich abhängig von anderen Einflussgrößen eingestellt wird, derart, dass jeweils der kleinste gewünschte Druck eingestellt wird.

5. Verfahren nach Anspruch 4, **dadurch gekennzeichnet, dass** der Druck (pss) im Ansaugrohr (14) zusätzlich abhängig von einer Druckvorgabe (pss1) einer Bremsunterdruckregelung (38) eingestellt wird, derart, dass jeweils der kleinste gewünschte Druck eingestellt wird.

6. Verfahren nach einem der vorhergehenden Ansprüche, **dadurch gekennzeichnet, dass** der Druck im Ansaugrohr abhängig von einer Temperaturkennlinie eingestellt wird.

7. Verfahren nach einem der vorhergehenden Ansprüche, **dadurch gekennzeichnet, dass** der Druck (pss) im Ansaugrohr (14) abhängig von einem aus der Temperatur (tmot) und einer relativen Kraftstoffmasse (rk) gebildeten Kennfeld (44) eingestellt wird.

8. Computerprogramm, **dadurch gekennzeichnet, dass** es zur Anwendung in einem Verfahren nach einem der vorhergehenden Ansprüche programmiert ist.

9. Steuer- und/oder Regeleinrichtung zum Betreiben einer Brennkraftmaschine (10), **dadurch gekennzeichnet, dass** sie zur Anwendung in einem Verfahren nach einem der Ansprüche 1 bis 7 programmiert ist.

## Claims

1. Method for operating an internal combustion engine (10), in which fuel is directly injected at least temporarily into at least one combustion chamber (12) in such a way and air is supplied at least temporarily to the combustion chamber (12) via an intake pipe (14) in such a way that a mixture of fuel and air is stratified in a combustion chamber (12) (stratification mode), and in which a temperature (tmot) specific to the internal combustion engine (10) is determined, **characterized in that** the temperature (tmot) of a fluid which, during the operation of the internal combustion engine (10), is conducted through this or past this and is thereby heated, in particular by cooling water (28) and/or cooling air and/or oil is determined, and, in the stratification mode, the pressure (pss) in the intake pipe (14) is set variably as a function of this determined temperature (tmot).

2. Method according to Claim 1, **characterized in that** the variation of the pressure (pss) in the intake pipe (14) takes place by means of a variation in the cross section of at least one region of the intake pipe (14).

3. Method according to Claim 2, **characterized in that** the variation of the pressure (pss) in the intake pipe takes place by means of a change in the angle of a throttle valve (18).

4. Method according to one of the preceding claims, **characterized in that** the pressure (pss) in the intake pipe (14) is additionally set as a function of other influencing variables, in such a way that in each case the lowest desired pressure is set.

5. Method according to Claim 4, **characterized in that** the pressure (pss) in the intake pipe (14) is additionally set as a function of a pressure stipulation (pss1) of a break-vacuum control (38), in such a way that in each case the lowest desired pressure is set.

6. Method according to one of the preceding claims, **characterized in that** the pressure in the intake pipe is set as a function of a temperature characteristic curve.

7. Method according to one of the preceding claims, **characterized in that** the pressure (pss) in the intake pipe (14) is set as a function of a characteristic diagram (44) formed from the temperature (tmot) and from a relative fuel mass (rk).

8. Computer program, **characterized in that** it is programmed for use in a method according to one of the preceding claims.

9. Control and/or regulating device for operating an internal combustion engine (10), **characterized in that** it is programmed for use in a method according to one of Claims 1 to 7.

## Revendications

1. Procédé pour actionner un moteur à combustion interne (10), selon lequel on injecte le carburant directement dans au moins une chambre de combustion (12) au moins temporairement et on amène de l'air à la chambre de combustion (12) au moyen d'une tubulure d'aspiration (14) au moins temporairement, de sorte qu'un mélange de carburant et d'air est stratifié (fonctionnement stratifié) dans la chambre de combustion (12), et on détermine une température spécifique( tmot) pour le moteur à combustion interne (10),
**caractérisé en ce qu**
on détermine la température (tmot) d'un fluide qui, pendant le fonctionnement du moteur à combustion interne (10), est dirigé à travers ou le long de celui-ci et est chauffé de ce fait, en particulier la température d'eau de refroidissement (28) et/ou d'air de refroidissement et/ou d'huile, et, dans le fonctionnement stratifié, on règle la pression (pss) dans la tubulure d'aspiration (14) de façon variable en fonction de cette température déterminée (tmot).

2. Procédé selon la revendication 1,
**caractérisé en ce qu'**
on fait varier la pression (pss) dans la tubulure d'aspiration (14) par une variation de la section d'au moins une zone de cette tubulure.

3. Procédé selon la revendication 2,
**caractérisé en ce que**
la variation de la pression (pss) dans la tubulure d'aspiration est réalisée par une variation d'angle d'un volet d'étranglement (18).

4. Procédé selon l'une des revendications précédentes,
**caractérisé en ce que**
la pression (pss) dans la tubulure d'aspiration est également réglée aussi en fonction d'autres grandeurs d'influence, pour régler la pression la plus faible voulue.

5. Procédé selon la revendication 4,
**caractérisé en ce que**
la pression (pss) dans la tubulure d'aspiration (14) est réglée aussi en fonction d'une donnée de pression (pss1) d'une régulation de dépression de freinage (38), pour régler la pression la plus faible voulue.

6. Procédé selon l'une des revendications précédentes,
**caractérisé en ce que**
la pression dans la tubulure d'aspiration est réglée en fonction d'une courbe de température.

7. Procédé selon l'une des revendications précédentes,
**caractérisé en ce que**
la pression (pss) dans la tubulure d'aspiration (14) est réglée en fonction d'un diagramme caractéristique composé de la température (tmot) et d'une masse de carburant relative (rk).

8. Programme informatique,
**caractérisé en ce qu'**
il est programmé pour une application dans un procédé selon l'une des revendications précédentes.

9. Dispositif de commande et/ou de régulation pour actionner un moteur à combustion interne (10),
**caractérisé en ce qu'**
il est programmé pour appliquer un procédé selon l'une des revendications 1 à 7.
